**Europäisches Patentamt**

**European Patent Office**

**Office européen des brevets**

(19)

(11) Veröffentlichungsnummer: **0 325 159**
**A2**

(12) # EUROPÄISCHE PATENTANMELDUNG

(21) Anmeldenummer: **89100450.9**

(22) Anmeldetag: **12.01.89**

(51) Int. Cl.4: **B01D 11/02 , B09B 5/00**

(30) Priorität: **16.01.88 DE 3801150**

(43) Veröffentlichungstag der Anmeldung:
**26.07.89 Patentblatt 89/30**

(84) Benannte Vertragsstaaten:
**AT BE FR GB NL**

(71) Anmelder: **G E S U GESELLSCHAFT FÜR
SAUBERE UMWELT MBH
Dürerstrasse 20
D-1000 Berlin 45(DE)**

(72) Erfinder: **Scholz, Michael, Dipl.-Ing.
Steinäckerstrasse 20
D-1000 Berlin 45(DE)
Erfinder: Pietzko, Hans-Joachim, Dipl.-Ing.
Dickernstrasse 149
D-4650 Gelsenkirchen(DE)
Erfinder: Pansy, Dieter, Masch.-Ing. (grad)
Kreuznacher Strasse 6
D-1000 Berlin 33(DE)
Erfinder: Felske, Erhard
Hermsdorfer Damm 79
D-1000 Berlin 28(DE)**

(74) Vertreter: **König, Reimar, Dr.-Ing. et al
Patentanwälte Dr.-Ing. Reimar König
Dipl.-Ing. Klaus Bergen Wilhelm-Tell-Strasse
14 Postfach 260162
D-4000 Düsseldorf 1(DE)**

(54) **Verfahren und Vorrichtung zum kontinuierlichen Reinigen von kontaminierten Böden.**

(57) Bei einem mehrstufigen Waschverfahren zum kontinuierlichen Reinigen von kontaminierten Böden in einem geschlossenen Kreislauf, wird das Aufgabegut in einer Kieswäsche (I) in Anwesenheit oberflächenaktiver Stoffe geläutert, dabei werden die kohlenwasserstoffhaltigen Schadstoffe von den Bodenpartikeln abgelöst und in das Waschwasser emulgiert, sowie in einer Sandwäsche (II) den Bodenbestandteilen während eines gleichzeitigen Waschens mit hoher, gezielt eingetragener Energiezufuhr noch einmal oberflächenaktive Stoffe zugegeben und von den Sandkörnern abgelöste Schadstoffe in das Wasser emulgiert. In der Feinsand-/Schluffwäsche (III) wird durch eine erneute, den Bodenbestandteilen angepaßte Energiezufuhr beim Waschen ein weiteres Abtrennen von Schadstoffen erreicht.

## Verfahren und Vorrichtung zum kontinuierlichen Reinigen von kontaminierten Böden

Die Erfindung betrifft ein Verfahren zum kontinuierlichen Reinigen von kontaminierten Böden in einem geschlossenen Kreislauf, bei dem der Boden zum Abtrennen grober Verunreinigungen, in einer Kieswäsche vorgereinigt, in mit Zusatzmitteln versetztem Wasser gewaschen wird, die Schadstoffe extrahiert werden, der gereinigte Boden vom Waschwasser abgetrennt und die übrigbleibende Schlammsuspension in anschließenden Sand- und Feinsand- Schluffwäschen fraktioniert und das Waschwasser von den aus dem Boden extrahierten Schadstoffen gereinigt wird, und eine Vorrichtung zum Durchführen des Verfahrens.

Durch die Zeitschrift "Tiefbau - Ingenieurbau - Straßenbau", Okt. 1986, Seiten 514 bis 521, sind neben thermischen und biologischen Bodenreinigungsverfahren weiterhin auch Extraktionsverfahren bekanntgeworden. Es zählt demnach zum Stand der Technik, mit Schadstoffen verunreinigte Böden mit Flüssigkeiten, insbesondere Wasser mit Chemikalien, zu waschen, um die Schadstoffe zu extrahieren. Die in gelöster Form oder als Suspension in die Wasserphase übergehenden Schadstoffe werden so vom Boden abgetrennt, das schadstoffbeladene Wasser anschließend gereinigt und gegebenenfalls rezirkulierend in den Waschprozeß zurückgeführt.

Die Wirtschaftlich- und Wirksamkeit eines Extraktionsverfahrens hängt wesentlich von der intensiven Wäsche in dem Extraktionsapparat ab. Um hier einen Mittelweg einzuhalten, arbeiten die bekannten extraktiven Bodenreinigungsanlagen mit einem Trennschnitt, der bei ca. 60 Mikron liegt. Als nachteilig hat sich dabei die große anfallende Reststoffmenge herausgestellt, die entsorgt werden muß, beispielsweise durch Verbrennen nach dem Ausschleusen und Entwässern des Bodens.

Der Erfindung liegt die Aufgabe zugrunde, ein gattungsgemäßes Verfahren und eine Vorrichtung zum kontinuierlichen Reinigen von kontaminierten Böden bis zu einer Größe der Schluffpartikel von 20 Mikron zu optimieren.

Erfindungsgemäß wird diese Aufgabe verfahrensmäßig dadurch gelöst, daß das Aufgabegut in der Kieswäsche in Anwesenheit von Extraktionsmitteln geläutert wird, wobei die in die Wasserphase übergehenden Schadstoffe von den Bodenpartikeln abgelöst werden, daß in der Sandwäsche den Bodenbestandteilen während eines gleichzeitigen Waschens mit hoher Energiezufuhr noch einmal Extraktionsmittel zugegeben und von den Sandkörnern abgelöste Schadstoffe in das Waschwasser extrahiert werden sowie in der Feinsand-Schluffwäsche durch eine erneute hohe Energiezufuhr beim Abwaschen ein weiteres Abtrennen von Schadstoffen stattfindet. Damit wird erfindungsgemäß die durch zahlreiche Versuche bestätigte Erkenntnis ausgenutzt, daß bei einer modular aufgebauten extraktiven Bodenaufbereitung durch eine in unterschiedlichen Reinigungsstufen eingebrachte hohe Energie, wie durch eine große Antriebsleistung von Rührwerken oder einen Druck des zugeführten Waschwassers von mehreren bar, in Verbindung mit einer gezielten Zugabe von Extraktionsmitteln die am Boden korn haftenden Schadstoffe durch Reiben der Kornoberflächen aneinander und Herabsetzen der Oberflächenspannung abgelöst und ins Waschwasser emulgiert bzw. in die Wasserphase übergeleitet werden. Hierbei lassen sich die folgenden Extraktionsmittel vorzugsweise einsetzen: oberflächenaktive Stoffe (Tenside) für organische Schadstoffe; Säure und Komplexbildner für Schwermetalle sowie Säure bzw. Lauge für Cyanide, Chromate und Nitrite. Insbesondere Kohlenwasserstoffe lassen sich über 90 entfernen. Der Trennschnitt der fraktionierten Bodenbestandteile liegt bei 20 Mikron. Neben den organischen Verbindungen, wie aliphatische, aromatische, polycyclische aromatische oder halogenierte Kohlenwasserstoffe (leicht und schwerflüchtig), polychlorierte Biphenyle (PCB), chlorierte Kohlenwasserstoffe (CKW), Polyaromaten (PAK), Benzole und Phenole lassen sich somit beispielsweise auch anorganische Verbindungen, wie Schwermetalle (z.B. Cadmium, Arsen, Quecksilber, Blei, Kupfer und Nickel) und Gifte wie Zyanide, Nitrite und Chromate entfernen.

Aus dem Verfahrensablauf von der Bodenaufgabe über die Kies-, die Sand- und die Feinsand-/Schluffwäsche bis zur Abwasserreinigung gemäß den Schritten a bis n ist ersichtlich, daß - zum Entfernen von Kohlenwasserstoffen - oberflächenaktive Stoffe, die die Oberflächenspannung herabsetzen und organische Verunreinigungen von den Körnern ablösen, gemäß dem Verfahrensschritt c einmal bereits in der Kieswäsche und gemäß dem Verfahrensschritt g ein weiteres Mal in der Sandwäsche zugegeben werden. Der Aufteilung des Waschvorganges in drei Stufen liegt dabei die Erkenntnis zugrunde, daß unterschiedliche Korngrößen auch unterschiedliche Reinigungsmethoden erfordern. Kieskörner (>2,0 mm) lassen sich alleine durch die Zugabe von geeigneten Extraktionsmitteln erfolgreich reinigen. Sandkörner (2,0 - 0,06 mm) müssen zusätzlich mit hohem Energieeintrag gewaschen werden. Dazu wird die Energie schnellaufender Rührwerke über Reibung auf die Kornoberfläche übertragen, und damit der gewünschte Wascheffekt erzielt. Von Schluffpartikeln (<0,06 mm) werden die Schadstoffe vorzugsweise durch eine Druckerhöhung des Boden-Wasser-Gemisches mit anschließendem Durchfluß durch eine Multizyklongruppe infolge Turbulenzen und Verwirbelungen abgelöst. Nach der gezielten Energiezufuhr werden die einzelnen Fraktionen intensiv gespült. Die Schadstoffe werden dabei endgültig von der Kornoberfläche abtransportiert.

Als oberflächenaktiver Stoff läßt sich vorzugsweise eine Mischung aus nichtionogenen und kationischen Tensiden verwenden. Als kationisches Tensid eignet sich Tris- (oligooxyethyl)-alkylammoniumphospat und als nichtionogenes Tensid Alkylpolyglycol-äther. Für aus Bodenabraum und Bauschutt bestehendes Erdreich mit einer aliphatischen Kohlenwasserstoffbelastung sowie geringen Mengen polyaromatische Kohlenwasserstoffe betrug das Mischungsverhältnis des nichtionogenen Tensids zu dem kationischen Tensid 2 : 1, bezogen auf die Aktivsubstanz, und die Zugabemenge beider Tenside 0,75 l/t Erdreich. Eine Steigerung dieser Dosierung ist unwirtschaftlich, weil sonst zusätzlich ein Anti-Schaumbildner zugegeben werden müßte. Die optimale Tensidzusammensetzung muß für jeden Boden neu bestimmt werden.

Als oberflächenaktiver Stoff läßt sich auch eine Mischung aus anionischen und kationischen Tensiden verwenden. Ionische Tenside besitzen gegenüber den nichtionogenen Tensiden bei der am Prozeßende stehenden Abwasserreinigung den Vorteil, daß eine dort erforderliche Emulsionsspaltung durch organische Emulgatoren weniger aufwendig und schwierig ist.

Wenn der Wassergehalt während des Läuterns gemäß dem Verfahrensschritt c bei maximal 40 % liegt, läßt sich das Läutern kontaminierten Erdreichs vorteilhaft mittels eines Doppelwellenschwerterwäschers durchführen. Vorteilhaft werden während des Waschprozesses als freie Phase aufschwimmende Öle abgetrennt und entfernt. Dazu lassen sich vorteilhaft in der Sand- und in der Feinsand-/Schluffwaschstufe Ölsammelbehälter anordnen, die die in einem beispielsweise als Aufstromsortierer ausgebildeteten Leichtstoffseparator abgetrennten freien Öle aufnehmen. Mittels eines Skimmers werden die Öle aus dem Sammelbehälter ausgetragen und dem Verfahrenskreislauf entzogen.

Vorzugsweise wird die hohe Energiezufuhr im Schritt g über einen Zeitraum von ca. 20 min aufrechterhalten. Eine hohe Energiezufuhr läßt sich vorzugsweise mit einem Hochleistungsmischer erreichen, der aus hintereinandergeschalteten Reaktionszellen mit Rührwerken besteht, deren Motorleistung zumindest 180 kW beträgt. Es hat sich herausgestellt, daß Durchlaufzeiten von weniger als 20 min. die Waschleistung erheblich verringern, längere Verweilzeiten aber keine entscheidende Verbesserung bringen.

Eine Vorrichtung zum Durchführen des Verfahrens besteht vorzugsweise aus einer in der Kieswaschstufe angeordneten, einem Doppelwellenschwerterwäscher vorgeschalteten Schwerlastsiebmaschine, einem dem Schwerterwäscher und einer Waschtrommel nachgeschalteten, in zwei parallele Bahnen längsgeteilten Schwingentwässerer mit einer Unterlaufwanne und daran angeschlossener Pumpe. In der Sandwaschstufe läßt sich ein Doppelzyklon anordnen, dem sich ein Hochleistungsmischer, ein Pumpensumpf mit Pumpe, ein Hydrozyklon, ein vorteilhaft als Aufstromsortierer ausgebildeter Wirbelschichtsortierer mit nachgeschaltetem Schwingentwässerer so wie ein dem Aufstromsortierer und dem Hydrozyklon zugeordnetes Sieb mit nachgeschaltetem Pumpensumpf und Pumpe anschließen können. In der Feinsand-Schluffwaschstufe kann sich einem vorteilhaft als Multizyklongruppe ausgebildeten Hochleistungsextraktor sich ein Leichtstoffseparator und ein vorzugsweise als Vakuum-Bandfilter ausgebildeter Filter anschließen. Dem Filter und dem Separator sind Bogensiebe mit nachgeschaltetem Pumpensumpf für Schluffpartikel und eine an das Filter angeschlossene Pumpe zugeordnet; zwischen der Pumpe und dem Filter ist ein Feinstoffextraktor angeordnet; schließlich gehört zu der Vorrichtung noch eine nachgeschaltete Prozeßwasseraufbereitungsanlage.

Wie Versuche bestätigt haben, bietet ein Vakuumbandfilter beim Entwässern der erfindungsgemäß sehr kleinen Kornfraktionen bis 20 Mikron gegenüber einem Entwässerungssieb hinsichtlich des Abscheidens erhebliche Vorteile; außerdem treten bei inkompressiblem Feinsand keinerlei Probleme auf, wie das bei Pressen zum Entwässern der Fall ist. Beispielsweise beträgt bei einer mittleren Austragsleistung von 15 t/h gereinigten Bodens und einer Maschenweite des Filterbandes von nur 0,04 mm die Filterfläche ca. 2.0 m²/t aufgegebenen Materials. Bestandteile, die kleiner als 0.04 mm sind, verbleiben im Filterkuchen; der Wassergehalt des Bodenaustrags beträgt 20 %.

Die Aufbereitung des am Verfahrensende übrigbleibenden Abwassers, das neben den Bodenpartikeln ≤20 Mikron die gelösten und - bei Zugabe oberflächenaktiver Stoffe -emulgierten Schadstoffe enthält, ist konventionell. In einer Sedimentationstufe werden dem Abwasser unter Einsatz von Polyelektrolyte die Bodenpartikel entzogen. Das schadstoffhaltige Klarwasser wird dem Waschprozeß wieder zugeführt und hat die Aufgabe, den Wassergehalt des kontaminierten Bodens so weit hinaufzusetzen, daß das Boden Wassergemisch pumpfähig wird. Das Sediment wird eingedickt und mit einer Siebbandpresse entwässert und entsorgt, bspw. durch eine Hochtemperatur-Verbrennung. Ein Teilstrom des Klarwassers wird weiter aufbereitet. Die in dem Teilstrom vorhandene Emulsion aus Lösungsmitteln und Schadstoffen wird durch die Zugabe von organischen Demulgatoren gespalten. In einer Entspannungsflotation schwimmen die freien Öle, unterstützt von feinperligen Luftblasen, an die Oberfläche und werden dort aus dem Prozeßwasser entfernt. Das Frischwasser muß möglichst schadstoffarm sein. In einem weiteren Schritt werden deshalb gelöste Wasserinhaltsstoffe in einem Aktivkohlefilter mit vorgeschaltetem Kiesfilter adsorbiert. Das im Aktivkohlefilter gereinigte Frischwasser erfüllt die an eine Kanaleinleitung gestellten Bedingungen.

Die Erfindung wird nachfolgend anhand einer schematisch als Fließschema dargestellten Anlage zum Reinigen von kontaminiertem Boden näher erläutert.

Der im Anschluß an die Bodenaufgabe modular aufgebaute Waschprozeß umfaßt eine Kieswaschstufe I, eine Sandwaschstufe II und eine Feinsand-Schluffsandwaschstufe III; den Waschstufen I bis III ist die Prozeßwasseraufbereitung IV nachgeschaltet. In der Bodenaufgabe wird ein Aufgabebunker 1 mit kontaminiertem Boden beschickt. Über einen Förderer 2, bspw. ein Panzerförderer, gelangt der Boden zu einer Schwerlastsiebmaschine 3 mit zwei übereinander liegenden Siebbelägen 4.5. Die Maschenweite des oberen Siebes 4 beträgt 100 mm und die des unteren Siebes 5 etwa 50 mm; Grobstoffe, die größer als 50 mm sind, werden durch Vibrationen der Siebbeläge 4, 5 abgetrennt. Trotz der guten Auflösung von bindigen Bodenbestandteilen bspw. Lehmklumpen, gelangen solche Klumpen und Erdballen zusammen mit den Grobstoffen über 50 mm gemäß Pfeil 6 in einen Brecher 7, beispielsweise eine Prallmühle, die die Grobstoffe auf eine Größe von 30 bis 50 mm zerkleinert und die Lehmklumpen auflöst. Der Bodenbestandteile bis 50 mm Größe enthaltende Unterlauf 8 der Schwerlastsiebmaschine 3 und das in der Brailmühle 7 gebrochene Material werden diskontinuierlich in einem Behälter 9 zusammengeführt, der das zugeführte Material speichert und kontinuierlich über eine Vibrationsrinne 10 an ein Förderband 11 abgibt. Bevor das zerkleinerte Material in einen Doppelwellenschwerterwäscher 12 weitergeleitet wird, entfernt ein oberhalb des Förderbandes 11 angeordneter Elektromagnet metallische Gegenstände, z.B. Bewehrungseisen und Stahlteile aus dem Aufgabegut; die metallischen Teile gelangen in einen Sammelbehälter 13 und werden dem Prozeß entzogen. Die Bodenaufgabe und -aufbereitung ist damit abgeschlossen, und in den Doppelwellenschwerterwä scher 12 der Kieswäsche 1 gelangt ein von Metallen befreites Aufgabegut.

Die aneinander haftenden Bodenbestandteile des Aufgabeguts werden im Doppelwellenschwerterwäscher 12 geläutert, um die Oberfläche der einzelnen Körner für den Waschprozeß zugäng lich zu machen. In den Schwerterwäscher 12 gemäß Pfeil 14 als Extraktionsmittel zugegebene Tenside lösen bereits während des Läuterns kohlenwasserstoffhaltige Schadstoffe von den Bodenkörnern ab; die Schadstoffe werden in das gemäß Pfeil 15 zugegebene Waschwasser emulgiert. Je nach der Schadstoffart können auch andere Extraktionsmittel eingesetzt werden. Das Grobkorn größer als 1 mm wird entgegen der Neigung des Schwerterwäschers 12 transportiert und oben ausgetragen. Der nur noch geringe Mengen an Sandkörnern enthaltende Austrag 16 gelangt in eine Waschtrommel 17. Zusammen mit dem Grobkorn enthält der Austrag 16 des Doppelwellenschwerterwäschers 12 auch Kohle- und Holzteile, an die sich viele Schadstoffe anlagern. Ein Ablösen dieser Schadstoffe ist aufgrund der großen Oberfläche und der porösen Struktur der Kohle- und Holzteile nur begrenzt möglich. In der Waschtrommel 17 werden diese Leichtstoffe und das saubere Kieskorn voneinander getrennt. Das Aufgabegut wird dazu gegen einen Wasserstrom gefördert, wobei die leichteren Kohle- und Holzteile als Überlauf mit dem Wasser gemäß Pfeil 18 weggeschwemmt werden, während sich andererseits der Kies gegen den Wasserstrom bewegt, dadurch zusätzlich gewaschen und in Pfeilrichtung 19 auf einen Schwingentwässerer 20 ausgetragen wird. Auf den Schwingentwässerer 20 gelangt außerdem der zusammen mit dem Waschwasser an dem in Neigungsrichtung des Schwerterwäschers 12 liegenden Ende ausgetragene Überlauf 21, der die Kornfraktionen kleiner als 1 mm beinhaltet.

Damit sich die Grobkörner und die Kornfraktionen kleiner als 1 mm in dem Schwingentwässerer 20 nicht wieder vermengen, ist dieser längsgeteilt und besitzt zwei separate Bahnen 22, 23. Der Kiesaustrag gemäß Pfeil 19 von der Wasch trommel 17 zum Schwingentwässerer 20 gelangt auf die Bahn 22, deren Maschenweite 2,0 mm beträgt. Der Kies wird auf dem Schwingentwässerer 20 entwässert und mit Frischwasser nachgespült. Im Anschluß daran wird der Kies größer als 2 mm von einem Förderband 25 weitergeleitet und zum Wiegen auf eine Bandwaage 26 transportiert. Die andere Bahn 23 des Schwingentwässerers 20 weist ebenfalls eine Maschenweite von 2 mm auf; auf dieser Bahn werden der Überlauf 21 des Schwerterwäschers 12 und der Überlauf 18 der Waschtrommel 17 behandelt, d.h. die in der Waschtrommel 17 separierten Holz- und Kohleteile sowie sperrige Leichtstoffe (Wurzelwerk etc.) werden dem Waschprozeß entzogen; diese Bestandteile gelangen auf ein Förderband 27 und von dort in einen Kohle-Holz-Sammelbehälter 28. Die Maschenweiten der Siebe der Bahnen 22, 23 verhindern ein Austragen der weiterzubehandelnden Bodenbestandteile. Die Bodenbestandteile, die kleiner als 2,0 mm sind, werden in einer als Pumpensumpf ausgebildeten Unterlaufwanne 29 des Schwingentwässerers 20 gesammelt. Von einer Pumpe 30 wird das Boden-Wasser-Gemisch mit einem Wassergehalt von mindestens 80 gemäß Pfeil 31 in die Sandwäsche II gepumpt.

Das von dem Schwingentwässerer 20 in die Sandwäsche II gepumpte Boden-Wasser-Gemisch gelangt in einen Doppelzyklon 32, der ein möglichst starkes Eindicken und einen möglichst niedrigen Trennschnitt erlaubt; die Bodenbestandteile werden mit einem Feststoffgehalt im Unterlauf 33 von ca. 1200 g TS (Trockenstoffgehalt) pro Liter bei 0,06 mm getrennt. Der Unterlauf 33 wird in einem Hochleistungsmischer 34 unter hoher Energiezufuhr gewaschen, wobei die Reibung der Körner aneinander und die Zugabe von Tensiden (vgl. den Pfeil 14) die erforderliche Reinigungsleistung bewirken.

Der Mischer besteht aus vier hintereinandergeschalteten Reaktionszellen 35 mit Rührwerken 36; die mit einer Motorleistung von mindestens 180 kW angetriebenen, schnellaufenden Rührwerke kneten das Sand-Wasser-Gemisch intensiv, wobei das Material die hintereinander geschalteten Reaktionszellen 35 durchläuft. Das intensiv vermischte Material wird in einem Pumpensumpf 37 bis auf einen Wassergehalt von 80 % verdünnt und mittels einer Pumpe 38 gemäß Pfeil 39 zum Abspülen der emulgierten Schadstoffe von dem Bodenmaterial in einen Hydrozyklon 40 gepumpt.

Im Hydrozyklon 40 werden die Bodenbestandteile größer als 0,125 mm abgetrennt und einem als Aufstromsortierer ausgebildeten Wirbelschichtsortierer 41 zugeführt. Die Bodenfraktion mit der Korngröße 2,0 bis 0,125 mm wird im Sortierer 41 in einem Wassergegenstrom gespült. Dabei schwimmen freies Öl, Bodenteile kleiner als 0,25 mm sowie leichtere Kohle- und Holzpartikel auf, deren Durchmesser größer als 0,5 mm ist, wobei der Dichteunterschied ein Trennen bewirkt. Die aufgeschwommenen schadstoffhaltigen Kohle- und Holzpartikel werden in einem Bogensieb 43 mit einer Maschenweite von 0,5 mm aus dem Aufstromwasser entfernt und über ein Förderband 44 in einen Sammelbehälter 45 geleitet. Über das Bogensieb 43 wird außerdem der Überlauf 46 (vgl. den Pfeil 46) des Hydrozyklons 40 geleitet, um den nachfolgenden Extraktionsbetrieb behindernde Grobstoffe abzuscheiden. Das in dem Wirbelstromsortierer 41 gespülte Aufgabegut mit einer Körnung von 0,25 bis 2,0 mm wird in einem nachgeschalteten Schwingentwässerer 47 mit einer Maschenweite von 0,4 mm entwässert, anschließend mit Frischwasser 48 bebraust, erneut entwässert und ausgetragen.

Trotz der Maschenweite des Siebes des Schwingentwässerers 47 werden auch Bodenkörnungen kleiner als 0,4 mm entwässert, da sich auf dem Siebbelag ein Filterkuchen bildet, der auch kleinere Bodenteile als die Maschenweite zurückhält. Ein vereinzeltes Durchfallen von Kleinmaterial wird durch eine Kreislaufführung des Filtrats berücksichtigt, das gemäß Pfeil 49 an den Pumpensumpf 37 angeschlossen ist und von dort erneut - über den Hydrozyklon 40 - in den Kreislauf gelangt. Dem Bogensieb 43 sind ein Ölsammelbehälter 50 und ein Pumpensumpf mit Pumpe 51 nachgeschaltet, so daß sich im Wirbelschichtsortierer 41 aufschwimmendes freies Öl an der Oberfläche des Behälters 50 sammeln und über einen Skimmer in einen Ölsammelbehälter 52 abziehen läßt. Im Boden-Wasser-Gemisch des Pumpensumpfes sind somit lediglich noch gelöste, emulgierte und an Feststoffe gebundene Schadstoffe und Bodenbestandteile kleiner 0,25 mm enthalten. Der Austrag des Schwingentwässerers 47 wird von einem Sandförderband 53 zur Bandwaage 26 transportiert und dort dem Waschprozeß entzogen.

Die Pumpe 51 fördert das Boden-Wassergemisch mit einem Wassergehalt von ca. 90 % aus dem Ölsammelbehälter 50 in die Feinsand-/Schluffwaschstufe III, in der die Feststoffe größer als 0,25 mm in einem aus mehreren Multizyklonen bestehenden Extraktor 54 abgetrennt werden. Das Gemisch wird im Extraktor 54 mit einem Druck von 3 bar beaufschlagt, wobei die starke Verwirbelung den Wascheffekt hervorruft. Der Feststoffe mit einer Partikelgröße von 0,25 bis 0,25 mm enthaltene Unterlauf 55 des Extraktors 54 gelangt in einen Leichtstoffseparator 56, der wie der Wirbelschichtsortierer 41 als Aufstromsortierer ausgebildet ist. Nach dem Trennschnitt im Separator 56 gelangt der Austrag 57 mit einer Partikelgröße der Bodenbestandteile von 0,06 bis 0,25 mm auf ein Vakuum-Bandfilter 58 und wird dort entwässert, nachgespült, erneut entwässert und gemäß Pfeil 59 auf ein Schluffaustragband 60 sowie von dort zur Bandwaage 26 transportiert. Die Pfeile 61 und 62 verdeutlichen das dem Separator 56 bzw. dem Bandfilter 58 zugeleitete Frischwasser. Im Überlauf 63 des Separators 56 sind nunmehr die Kornfraktion von 0,02 bis 0,06 mm und schadstoffhaltige Leichtstoffe, wie Kohlebestandteile größer als 0,25 mm enthalten. Diese Leichtstoffe werden mittels eines eine Maschenweite von 0,25 mm besitzenden Bogensiebes 64 entfernt und über ein Austragband 65 in einen Container 66 gefördert.

Dem Bogensieb 64 ist ein Zwischenbehälter 67 nachgeschaltet, in dem freies Öl aufschwimmen kann. Das FeinsandSchluffgemisch gelangt danach in einen Pumpensumpf 68 und von dort mittels einer Pumpe 69 in einen Feinstoffextraktor 70, der wie der Extraktor 54 aus mehreren Multizyklonen besteht. Die eine Größe von 0,02 bis 0,06 mm besitzenden Schluffpartikel werden im Extraktor 70 abgetrennt und gemäß Pfeil 71 auf das Vakuumbandfilter 58 gebracht und dort zusammen mit dem Austrag des Leichtstoffseparators 56 behandelt.

In der Prozeßwasseraufbereitungsstufe IV werden die Bodenbestandteile mit einer Größe kleiner als 0,02 mm in Lamellenklärern 72 sedimentiert und Schadstoffe, die an der Oberfläche der Partikel adsorbiert sind, eliminiert. Das Sediment wird eingedickt und mit einer Siebbandpresse 73 entwässert. Eine Entsorgung des kontaminierten Schlammes findet über ein Austragband 74 statt. Das noch schadstoffhaltige Klarwasser wird in einen Ausgleichsbehälter 75 geleitet. Von dort wird über eine Pumpe 76 ein Teilstrom (Pfeil 77) abgezogen und zu dem Doppelwellenschwerterwäscher 12, der Waschtrommel 17, dem Schwingentwässerer 20 und dem Wirbelschichtsortierer 41 zurückgeführt. Der andere Teilstrom des Klarwassers wird weiter aufbereitet, wozu die vorhandene Emulsion durch die Dosierung von organischen, aus Chemikalientanks 78 entnommenen Demulgatoren gespalten wird. Das dabei entstehende freie Öl schwimmt in einer Druckentspannungsflotation 79 auf und wird eliminiert. Die gelösten Schadstoffe werden in einem Aktivkohlefilter 82 mit einem vorgeschalteten Kiesfilter 81 adsorbiert. Das Frischwasser wird gemäß Pfeil dem Waschprozeß zugeführt und dort zum Klarspülen der Kornfraktionen benutzt. Der gereinigte Boden besitzt einen Restfeuchtigkeitsgehalt; die dadurch entstehenden Wasserverluste werden nach Bedarf durch Leitungswasser 83 (vgl. den Pfeil 83) ausgeglichen. Das gereinigte Abwasser wird über einen Pufferbehälter 84 und eine Pumpe 85 zu den Verbraucherstellen zurückgeführt (Pfeil 86). Um eine Aufkonzentrierung von Salzen zu verhindern, wird ein Teilstrom (Pfeil 87) in die Kanalisation oder einen Vorfluter abgeleitet.

Für ein Schadstoffspektrum, das aliphatische Kohlenwasserstoffe, polyaromatische Kohlenwasserstoffe und polychlorierte Biphenyle enthielt, konnte die vorhandene Kontamination gleichmäßig von allen Kornfraktionen (40 mm bis 20 Mikron) gewaschen werden, wobei sich eine Reinigungsleistung, bezogen auf die Kohlenwasserstoffbelastung von 94 % ergab. Es lassen sich somit allein durch gezieltes Beeinflussen des Waschprozesses, nämlich durch die gezielte Zugabe von Tensiden verbunden mit hoher, gezielt eingebrachter Energiezufuhr, Bodenpartikel bis 20 Mikron mit einem hohen Reinigungsgrad behandeln.

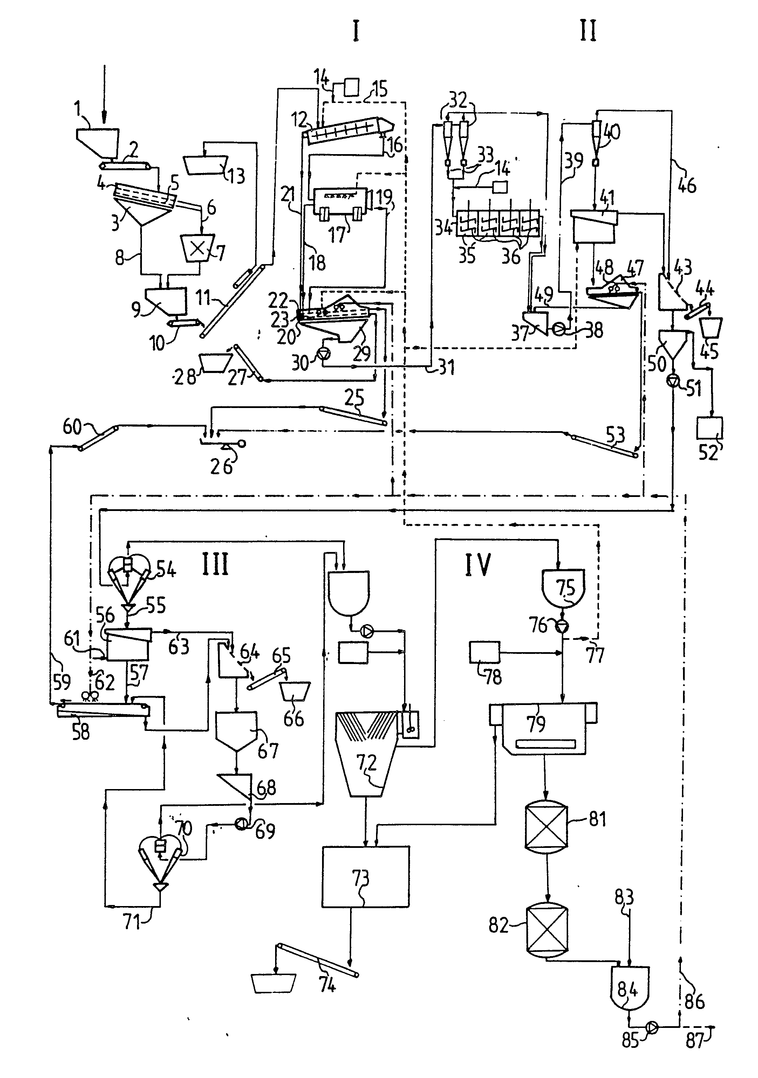

## Ansprüche

1. Verfahren zum kontinuierlichen Reinigen von kontaminierten Böden in einem geschlossenen Kreislauf, bei dem der Boden zum Abtrennen grober Verunreinigungen in einer Kieswäsche vorgereinigt, in mit Zusatzmitteln versetztem Wasser gewaschen wird, die Schadstoffe extrahiert werden, der gereinigte Boden vom Waschwasser abgetrennt und die übrigbleibende Schlammsuspension in anschließenden Sand- und Feinsand-/Schluffwäschen fraktioniert und das Waschwasser von den aus dem Boden extrahierten Schadstoffen gereinigt wird, dadurch gekennzeichnet, daß das Aufgabegut in der Kieswäsche in Anwesenheit von Extraktionsmitteln geläutert wird, wobei die Schadstoffe, die in die Wasserphase übergehen, von den Bodenpartikeln abgelöst werden, daß in der Sandwäsche den Bodenbestandteilen während eines gleichzeitigen Waschens mit hoher Energiezufuhr noch einmal Extraktionsmittel zugegeben und von den Sandkörnern abgelöste Schadstoffe in das Waschwasser extrahiert werden und daß in der Fein sand-/Schluffwäsche durch eine erneute hohe Energiezufuhr beim Waschen ein weiteres Abtrennen von Schadstoffen erreicht wird.

2. Verfahren nach Anspruch 1, gekennzeichnet durch die folgenden Schritte:

a) das kontaminierte Erdreich wird in Fein- und Grobstoffe getrennt, die Grobstoffe werden zerkleinert und danach dem Aufgabegut wieder zugeführt,

b) die eisenhaltigen Bestandteile werden abgeschieden,

c) das Aufgabegut wird durch Waschen geläutert, dabei werden Lehmklumpen aufgelöst, und unter Zugabe von Extraktionsmitteln werden dabei Schadstoffe von den Bodenpartikeln abgelöst und in das Waschwasser extrahiert, das Grobkorn größer als 2 mm wird getrennt von einem sich aus Waschwasser, aufgeschwemmten Leichtstoffen und Kornfraktionen kleiner als 2 mm zusammensetzenden Überlauf ausgetragen,

d) das Grobkorn wird gewaschen sowie klassifiziert, und die Leichtstoffe werden mit dem Waschwasser als Überlauf weggeschwemmt,

e) das gewaschene und klassifizierte Grobkorn größer als 2 mm wird entwässert, mit Frischwasser nachgespült, wieder entwässert und dem Waschprozeß entzogen,

f) aus den Überläufen gemäß c und d werden die Leichtstoffe und faserige Bestandteile separiert und dem Waschprozeß entzogen,

g) das verbleibende Sand-/Wassergemisch wird bei einem Trennschnitt von ca. 60 Mikron getrennt, und der Unterlauf wird mit hoher Energiezufuhr unter gleichzeitiger Zugabe entsprechender Extraktionsmittel gewaschen,

h) die Sandkörner größer als 0,2 mm werden von den als Überlauf weitergeleiteten kleineren Bodenbestandteilen abgetrennt, die gelösten Schadstoffe von diesen Sandkörnern abgespült und die Sandfraktion anschließend entwässert, mit Frischwasser bebraust, entwässert und ausgetragen,

i) beim Spülen der Sandkörner größer als 0,2 mm aufschwimmende schadstoffhaltige Materialien werden aus dem Waschwasser entfernt und dem Waschprozeß entzogen und gleichzeitig der Überlauf gemäß h) gesiebt,

k) der gesiebte Überlauf wird nachfolgend mit hoher Energie gewaschen und gleichzeitig bei ca. 0,02 mm ein Trennschnitt durchgeführt, wobei die Feststoffe mit der Korngröße von 0,02 bis 0,25 mm weitergeleitet und in einen Austrag mit Korngrößen von 0,06 bis 0,25 mm sowie einen Überlauf mit Kornfraktionen von 0,02 bis 0,06 mm einschließlich schadstoffhaltigen Leichtstoffen, wie Kohle größer als 0,2 mm, separiert werden,

l) der Austrag gemäß k) wird über einen Filter entwässert, nachgespült, entwässert und dem Waschprozeß entzogen,

m) aus dem Überlauf werden die schadstoffhaltigen Leichtstoffe entfernt sowie dem Waschprozeß entzogen, und die Schluffpartikel werden intensiv gewaschen, dabei die Schadstoffe abgetrennt und die Schluffpartikel anschließend über den Filter gemäß l) entwässert und nachgespült, und

n) aus dem übrigbleibenden Abwasser, in dem neben den Bodenpartikeln mit einer Größe ≤0,02 mm die gelösten und in die Wasserphase übergegangenen Schadstoffe enthalten sind, werden die Bodenpartikel und die Schadstoffe eliminiert und das gereinigte Wasser rezirkulierend verwendet.

3. Verfahren nach Anspruch 1 oder 2, dadurch gekennzeichnet, daß der Wassergehalt während des Läuterns gemäß Schritt c) bei max. 40 % liegt.

4. Verfahren nach einem oder mehreren der Ansprüche 1 bis 3, dadurch gekennzeichnet, daß zum Entfernen von Kohlenwasserstoffen oberflächenaktive Stoffe gezielt zugegeben werden, wobei eine Mischung aus nichtionogenen und kationischen Tensiden verwendet wird.

5. Verfahren nach einem oder mehreren der Ansprüche 1 bis 3, dadurch gekennzeichnet, daß zum Entfernen von Kohlenwasserstoffen oberflächenaktive Stoffe gezielt zugegeben werden, wobei eine Mischung aus anionischen und kationischen Tensiden verwendet wird.

6. Verfahren nach einem oder mehreren der Ansprüche 1 bis 5, dadurch gekennzeichnet, daß während des Waschpro zesses als freie Phase aufschwimmende Öle abgetrennt und entfernt werden.

7. Verfahren nach einem oder mehreren der Ansprüche 1 bis 6, dadurch gekennzeichnet, daß die hohe Energiezufuhr im Schritt g) über einen Zeitraum von ca. 20 min aufrechterhalten wird.

8. Vorrichtung zum Durchführen des Verfahrens nach einem oder mehreren der Ansprüche 1 bis 7, gekennzeichnet durch eine in der Kieswaschstufe (I) angeordnete, einem Doppelwellenschwerterwäscher (12) vorgeschaltete Schwerlastsiebmaschine (3), einem dem Schwerterwäscher (12) und einer Waschtrommel (17) nachgeschalteten, in zwei parallele Bahnen (22,23) längsgeteilten Schwingentwässerer (20) mit einer Unterlaufwanne (29) und daran angeschlossener Pumpe (30), durch einen in der Sandwaschstufe (11) angeordneten Doppelzyklon (32) dem sich ein Hochleistungsmischer (34), ein Pumpensumpf (37) mit Pumpe (38), ein Hydrozyklon (40), ein Wirbelschichtsortierer (41) mit nachgeschaltetem Schwingentwässerer (47) sowie ein dem Wirbelschichtsortierer und dem Hydrozyklon (40) zugeordnetes Sieb (43) mit nachgeschaltetem Pumpensumpf (so) und Pumpe (51) anschließen, durch einen in der Feinsand-/Schluffwaschstufe (III) angeordneten Hochleistungsextraktor (54), dem sich ein Leichtstoffseparator (56) und ein Filter (58) anschließen, wobei dem Filter (58) und dem Separator (56) ein Sieb (64) mit nachgeschaltetem Pumpensumpf (68) für Schluffpartikel und eine an das Filter (58) angeschlossene Pumpe (69) zugeordnet sind, sowie zwischen der Pumpe (69) und dem Filter (58) ein Feinstoffextraktor (70) angeordnet ist, und durch eine nachgeschaltete Prozeßwasseraufbereitungsanlage (4).

9. Vorrichtung nach Anspruch 8, dadurch gekennzeichnet, daß der Wirbelschichtsortierer als Aufstromsortierer (41) ausgebildet ist.

10. Vorrichtung nach Anspruch 8 oder 9, dadurch gekennzeichnet, daß der Hochleistungsextraktor aus einer Multizyklongruppe (54) besteht.

11. Vorrichtung nach einem oder mehreren der Ansprüche 8 bis 10, dadurch gekennzeichnet, daß der Leichtstoffseparator als ein Aufstromsortierer (56) ausgebildet ist.

12. Vorrichtung nach einem oder mehreren der Ansprüche 8 bis 11, dadurch gekennzeichnet, daß das Filtergerät aus einem Vakuum-Bandfilter (58) besteht.

13. Vorrichtung nach einem oder mehreren der Ansprüche 8 bis 11, dadurch gekennzeichnet, daß die Siebe als Bogensiebe (43,64) ausgebildet sind.

14. Vorrichtung nach einem oder mehreren der Ansprüche 8 bis 13, dadurch gekennzeichnet, daß der Hochleistungsmischer (34) aus hintereinander geschalteten Reaktionszellen (35) mit Rührwerken (36) besteht.

15. Vorrichtung nach Anspruch 14, dadurch gekennzeichnet, daß die Motorleistung der Rührwerke (36) zumindest 180 kW beträgt.

16. Vorrichtung nach einem oder mehreren der Ansprüche 8 bis 15, dadurch gekennzeichnet, daß Ölsammelbehälter (49,67) in der Sandwasch- und in der Feinsand-Schluffwaschstufe (II;III) angeordnet sind.